# EUROPÄISCHE PATENTSCHRIFT

(11) **EP 4 058 697 B1**
(45) Veröffentlichungstag und Bekanntmachung des Hinweises auf die Patenterteilung: **30.10.2024**
(21) Anmeldenummer: 20808031.7
(22) Anmeldetag: 12.11.2020
(51) Int. Cl.: F16K 1/42, F16K 1/46, F16K 31/06, F16K 39/02, F01P 7/14

(54) **REGEL- ODER SCHALTVENTIL FÜR EINEN KÜHLMITTELKREISLAUF EINES KRAFTFAHRZEUGS**
CONTROL OR SWITCHING VALVE FOR A COOLANT CIRCUIT OF A MOTOR VEHICLE
VANNE DE COMMANDE OU DE COMMUTATION POUR UN CIRCUIT D'AGENT DE REFROIDISSEMENT D'UN VÉHICULE À MOTEUR

(30) Priorität: 14.11.2019 DE 102019130714
(43) Veröffentlichungstag der Anmeldung: 21.09.2022
(73) Patentinhaber: Pierburg GmbH, 41460 Neuss (DE)
(72) Erfinder: SADIKU, Besart, 41460 Neuss (DE); HERMANN, Max, 41460 Neuss (DE); SCHUMACHER, Julian, 41460 Neuss (DE); AYDAN, Sami, 41460 Neuss (DE); NIEBORG, Dominik, 41460 Neuss (DE)
(74) Vertreter: terpatent PartGmbB
(86) Internationale Anmeldenummer: PCT/EP2020/081911
(87) Internationale Veröffentlichungsnummer: WO 2021/094454

(56) Entgegenhaltungen:
- EP-A1- 0 654 627
- WO-A1-2016/124363
- DE-A1- 102009 003 227
- DE-A1- 4 301 004
- DE-U1- 20 117 945
- JP-A- 2009 174 690
- US-A- 4 064 904
- US-A1- 2006 185 652

## Beschreibung

Die Erfindung betrifft ein Regel- oder Schaltventil für einen Kühlmittelkreislauf eines Kraftfahrzeugs mit einem Gehäuse, das einen Einlass und einen Auslass aufweist, einem Durchströmungsquerschnitt, der zwischen dem Einlass und dem Auslass ausgebildet ist und von einem Ventilsitzelement umgeben ist, einem Regelkörper, der auf dem Ventilsitzelement absetzbar und von dem Ventilsitzelement abhebbar ist, und einem Aktor, der mit dem Regelkörper gekoppelt ist.

Derartige Regel- oder Schaltventile können vielfältig verwendet werden. Zu nennen ist insbesondere deren Verwendung als Kühlmittel-Absperrventil zum Absperren oder Freigeben eines Kühlmittelflusses in einem Kühlmittelkreislauf eines Kraftfahrzeugs. Ein derartiges Kühlmittelventil umfasst üblicherweise ein Gehäuse mit einem Einlass und einem Auslass, wobei in Strömungsrichtung zwischen dem Einlass und dem Auslass ein Regelkörper und ein mit dem Regelkörper zusammenwirkender Ventilsitz angeordnet sind. Außerdem weist das Kühlmittelventil einen Aktor auf, welcher mit dem Regelkörper gekoppelt ist, wobei durch eine Betätigung des Aktors der Regelkörper auf dem Ventilsitz abgesetzt oder von diesem abgehoben werden kann. Ein derartiges Ventil offenbart beispielsweise die WO 2016/124363 A1.

Der mit dem Regelkörper zusammenwirkende Ventilsitz ist entweder einstückig mit dem Gehäuse ausgeführt oder der Ventilsitz ist durch ein separates Ventilsitzelement ausgeführt und am Gehäuse befestigt. Ein Regel- oder Schaltventil mit einem separaten Ventilsitzelement offenbart beispielsweise die EP 0 958 155 A1. Das Ventilsitzelement ist ringförmig ausgeführt und über seine Außenumfangsfläche an dem Gehäuse befestigt. An der dem Regelkörper zugewandten Seite weist das Ventilsitzelement eine Ventildichtfläche auf, auf welcher der Regelkörper absetzbar und von welcher der Regelkörper abhebbar ist.

Die DE 10 2009 003 227 A1 sowie die US 4064904 B1 offenbaren ein Ventil mit einem separaten Ventilsitzelement, wobei das Ventilsitzelement jeweils einen Kunststoffträger und ein an dem Kunststoffträger befestigtes Dichtelement aufweist. Das Dichtelement weist an einer einem Regelkörper zugewandten Seite eine Dichtfläche auf und liegt mit einer dem Regelkörper abgewandten Seite an einem Vorsprung eines Ventilgehäuses dichtend an.

Ferner wird in der DE 43 01 004 A1 ein Dichtkörper für eine Armatur offenbart, welcher zweiteilig ausgeführt ist und zwei Abdichtbereiche zum Gehäuse aufweist.

Aus dem Dokument DE 201 17 945 U1 ist ein Ventilsitz aus hartem Material, z.B. Kunststoff oder Keramik, und einem Ventilteller aus einem weichen, elastomeren Material bekannt.

Aus dem Dokumenten EP 0 654 627 A1 und JP 2009 - 174690 A ist jeweils ein Ventil bekannt, wobei zwei Komponenten des Ventilelements miteinander verschweißt sind.

Im geschlossenen Zustand des Regel- oder Schaltventils soll kein Fluid ausgehend vom Einlass zum Auslass strömen. Nachteilhaft an einem Regel- oder Schaltventil mit einem separaten Ventilsitzelement ist, dass im Anlagebereich zwischen dem Ventilsitzelement und dem Gehäuse ein Leckagepfad vorliegt, so dass auch im geschlossenen Zustand des Regel- oder Schaltventils das Fluid vom Einlass zum Auslass über den Leckagepfad strömen kann.

Es stellt sich daher die Aufgabe, ein Regel- oder Schaltventil bereitzustellen, welches eine zuverlässige fluidische Abdichtung zwischen dem Einlass und dem Auslass im geschlossenen Zustand des Regel- oder Schaltventils gewährleistet.

Diese Aufgabe wird durch ein Regel- oder Schaltventil mit den Merkmalen des Hauptanspruchs 1 gelöst.

Dadurch, dass das Ventilsitzelement ein Hartkunststoffelement und ein Elastomerelement aufweist, wobei das Hartkunststoffelement am Gehäuse befestigt ist und das Elastomerelement am Hartkunststoffelement befestigt ist, wobei das Elastomerelement an einer dem Regelkörper zugewandten Seite eine mit dem Regelkörper zusammenwirkende Ventildichtfläche aufweist und an einer dem Regelkörper abgewandten Seite ein an dem Gehäuse dichtend anliegendes Dichtelement aufweist, kann das Ventilsitzelement auf eine einfache und kostengünstige Weise fluiddicht am Gehäuse befestigt werden, so dass im geschlossenen Zustand des Regel- oder Schaltventils der Einlass zuverlässig vom Auslass fluidisch getrennt ist. Die fluiddichte Abdichtung des zwischen dem Gehäuse und dem Ventilsitzelement vorliegenden Leckagepfads erfolgt durch das am Elastomerelement vorgesehene und zu einer Gehäuseinnenfläche zugewandte Dichtelement, welches einstückig mit dem Elastomerelement ausgeführt ist und fluiddicht an einer Gehäuseinnenfläche anliegt.

Das Hartkunststoffelement ist mit dem Gehäuse verschweißt, wodurch eine zuverlässige Verbindung zwischen dem Gehäuse und dem Hartkunststoffelement geschaffen wird, wobei die Schweißverbindung eine zusätzliche Abdichtung des Leckagepfads bewirkt.

In einer bevorzugten Ausgestaltung ist das Hartkunststoffelement durch ein Ultraschallschweißverfahren mit dem Gehäuse verschweißt. Dadurch kann das Ventilsitzelement zuverlässig und innerhalb einer kurzen Schweißdauer am Gehäuse befestigt werden. Dabei sind sowohl das Gehäuse als auch das Hartkunststoffelement aus einem thermoplastischen Kunststoff hergestellt. Beim Ultraschallschweißen wird mit Hilfe eines Generators ein hochfrequenter Wechselstrom erzeugt und zu einem Ultraschallwandler übertragen, welcher aus dem hochfrequenten Wechselstrom eine mechanische Ultraschallschwingung erzeugt. Diese Schwingungen werden über eine Sonotrode auf die zu verbindenden Bauteile übertragen. Durch die auf die Bauteile übertragenen Schwingungen erhitzen sich die Bauteile und beginnen zu erweichen, wodurch der Dämpfungskoeffizient ansteigt. Die Zunahme des Dämpfungskoeffizienten führt zu höherer innerer Reibung, was die Temperaturerhöhung weiter beschleunigt. Die aufgeschmolzenen Werkstoffe verbinden sich und sind nach dem Abkühlen miteinander verschweißt. Es wird damit kein zusätzliches Material oder ein zusätzliches Bauteil zur Herstellung der Verbindung benötigt.

Vorzugsweise sind das Hartkunststoffelement und das Elastomerelement jeweils ringförmig ausgeführt, wobei das Hartkunststoffelement mit seiner Außenfläche am Gehäuse befestigt ist und an seiner Innenfläche das ringförmige Elastomerelement angeordnet ist. Dabei entspricht der Durchmesser der Außenumfangsfläche des Elastomerelements dem Durchmesser der Innenumfangsfläche des Hartkunststoffelements. Durch eine derartige Ausgestaltung des Hartkunststoffelements und des Elastomerelements können diese auf eine einfache Weise miteinander verbunden werden, wobei das Elastomerelement lediglich in die Innenöffnung des Hartkunststoffelements eingesteckt und darin fixiert werden muss.

In einer bevorzugten Ausgestaltung ist das Elastomerelement formschlüssig mit dem Hartkunststoffelement verbunden. In einer bevorzugten Ausgestaltung weist das Hartkunststoffelement an seiner Innenfläche einen Befestigungsvorsprung auf und das Elastomerelement weist an seiner Außenfläche eine zum Befestigungsvorsprung komplementäre Aussparung auf. Dadurch können das Hartkunststoffelement und das Elastomerelement einfach und zuverlässig miteinander verbunden werden, wobei beide Komponenten in einem vorangegangenen Schritt hergestellt werden können und anschließend durch ein einfaches Zusammenstecken miteinander verbunden werden können.

Vorzugsweise weisen der Befestigungsvorsprung und die Aussparung jeweils einen radialen Abschnitt und einen an den radialen Abschnitt anschließenden axialen Abschnitt auf. Der axiale Abschnitt dient zur Verbesserung der Befestigung des Elastomerelements am Hartkunststoffelement, wobei der axiale Abschnitt einen Hinterschnitt bildet. Durch die Elastizität des Elastomerelements kann der Befestigungsvorsprung des Hartkunststoffelements trotz des durch den axialen Abschnitt verursachten Hinterschnitts in die Aussparung des Elastomerelements eingeführt werden. Des Weiteren wird die Steifigkeit des Elastomerelements durch den in das Elastomerelement eingreifenden Befestigungsvorsprung erhöht.

In einer bevorzugten Ausgestaltung weisen der Befestigungsvorsprung und die Aussparung einen kreisringartigen Querschnitt auf. Dadurch ist der in das Elastomerelement eingreifende Befestigungsvorsprung homogen im Elastomerelement verteilt angeordnet, wodurch das Ventilsitzelement eine homogene Festigkeit und Steifigkeit aufweist.

Vorzugsweise weist der Befestigungsvorsprung mindestens eine axial erstreckende Aussparung und das Elastomerelement einen zur Aussparung komplementären Vorsprung auf, wodurch das Elastomerelement in Drehrichtung, d.h. um die Symmetrieachse des Ventilsitzelements, formschlüssig mit dem Hartkunststoffelement verbunden ist. Dadurch kann ein Verdrehen des Elastomerelements insbesondere relativ zum Hartkunststoffelement und zum Regelkörper verhindert werden und dadurch der Verschleiß des Elastomerelements reduziert werden.

Vorzugsweise ist das Dichtelement ein ringförmiger Vorsprung, welcher eine ringförmige Dichtfläche mit dem Gehäuse aufweist. Die ringförmige Dichtfläche umgibt den Einlass vollständig, wodurch ausgehend vom Einlass kein Fluid in den Spalt zwischen dem Ventilsitzelement und dem Gehäuse eindringen kann. Dadurch wird der Einlass zuverlässig vom Auslass abgedichtet.

In einer bevorzugten Ausgestaltung greift das Dichtelement in eine zum Dichtelement korrespondierende Nut ein, wobei die Nut an einer dem Dichtelement zugewandten Fläche des Gehäuses vorgesehen ist. Dadurch wird die Dichtwirkung zwischen dem Ventilsitzelement und dem Gehäuse nochmals erhöht, wobei das in den Spalt eindringende Fluid zusätzlich über die Nut umgeleitet wird und dadurch eine zusätzliche Dichtwirkung resultiert.

Vorzugsweise ist die Höhe H1 des Dichtelements in einem nicht-endmontierten Zustand des Ventilsitzelements größer als die Höhe H2 des Dichtelements in endmontierten Zustand. Im endmontierten Zustand ist das Ventilsitzelement derart angeordnet, dass das Dichtelement verformt ist und dadurch vorgespannt am Gehäuse anliegt. Dadurch wird eine zuverlässige Abdichtwirkung erzielt.

Vorzugsweise weist der Regelkörper mindestens eine Durchgangsbohrung auf, über die der Einlass stetig mit einem Raum an der dem Einlass abgewandten Seite des Regelkörpers verbunden ist. Dadurch ist der Regelkörper druckausgeglichen, wodurch ein kleinerer und damit kostengünstiger Aktor zur Verstellung des Regelkörpers eingesetzt werden kann. Der druckausgeglichene Regelkörper wird ausschließlich durch den Aktor oder eine Feder vordefiniert in Schließrichtung belastet, wodurch eine Überbelastung des Elastomerelements durch den Regelkörper im Bereich der Ventildichtfläche zuverlässig verhindert werden kann.

In einer bevorzugten Ausgestaltung ist der Aktor ein elektromagnetischer Aktor mit einem Anker, wobei der Anker mit dem Regelkörper gekoppelt und bewegbar ist. Dadurch kann der Aktor einfach, kompakt und kostengünstig ausgeführt werden und weist eine hohe Stelldynamik auf.

Es wird somit ein Regel- oder Schaltventil mit einem separaten Ventilsitzelement geschaffen, welches im geschlossenen Zustand des Regel- oder Schaltventils den Einlass und den Auslass zuverlässig voneinander fluidisch trennt.

Ein Ausführungsbeispiel eines erfindungsgemäßen Regel- oder Schaltventils ist in den Figuren dargestellt und wird nachfolgend beschrieben.

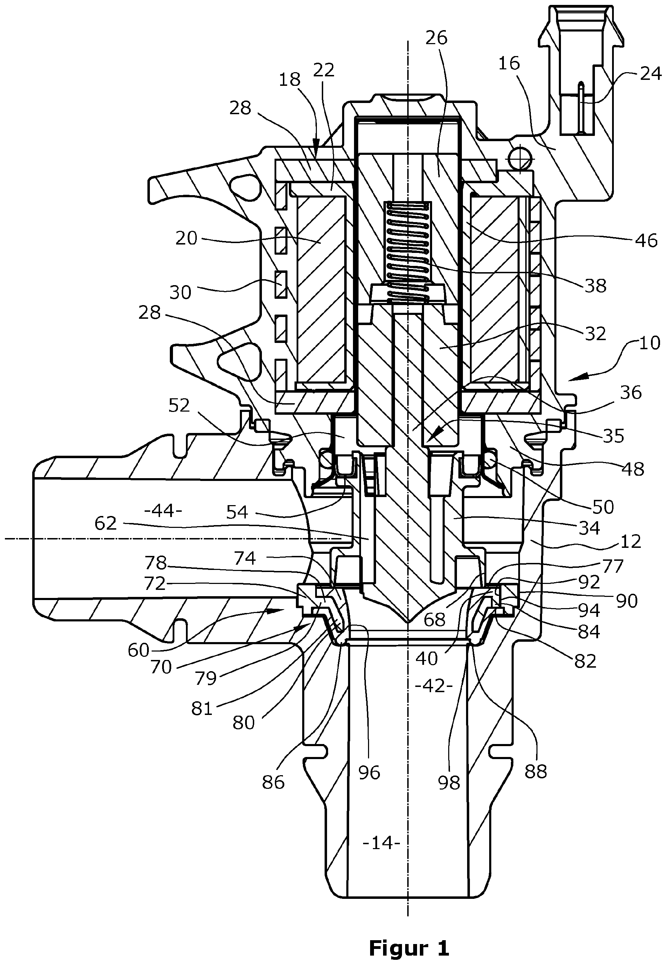

Figur 1 zeigt eine Seitenansicht eines erfindungsgemäßen Regel- oder Schaltventils in geschnittener Darstellung.

Das in Figur 1 dargestellte Regel- oder Schaltventil ist als Strömungsventil ausgeführt und umfasst ein Gehäuse 10, welches zweiteilig ausgeführt ist und ein Strömungsgehäuse 12 mit einem darin ausgebildeten Strömungskanal 14 und ein am Strömungsgehäuse 12 befestigtes Aktorgehäuse 16 aufweist. In dem Aktorgehäuse 16 ist ein elektromagnetischer Aktor 18 angeordnet.

Der elektromagnetische Aktor 18 weist einen elektromagnetischen Kreis auf, der eine Spule 20, die auf einen Spulenträger 22 gewickelt ist und über einen Stecker 24 bestrombar ist, sowie einen magnetisierbaren Kern 26, Rückschusselementen 28, einen Joch 30 und einen beweglichen Anker 32 umfasst. Bei einer Bestromung der Spule 20 wird der Anker 32 in bekannter Weise durch die entstehenden magnetischen Kräfte in Richtung des beweglichen Kerns 26 bewegt.

Der Anker 32 bildet mit einem Regelkörper 34 eine Bewegungseinheit 35, wobei der Anker 32 mit dem Regelkörper 34 über ein Koppelglied 36 verbunden ist. Das Koppelglied 36 ist einteilig mit dem Regelkörper 34 ausgebildet und erstreckt sich in eine Bohrung des Ankers 32 und ist in der Bohrung am Anker 32 befestigt. Über eine Feder 38 wird die Bewegungseinheit 35 in eine vom Kern 26 abweisenden Richtung belastet, wodurch ein ringförmiges Dichtelement 68 des Regelkörper 34 auf eine Ventildichtfläche 77 eines Ventilsitzelements 70 gedrückt wird, wobei das Ventilsitzelement 70 im Strömungsgehäuse 12 zwischen einem axialen Einlass 42 und einem radialen Auslass 44 ausgebildet ist, so dass ein Durchströmungsquerschnitt des Strömungskanals 14 verschlossen wird. Bei Bestromung der Spule 20 übersteigt die magnetische Kraft die Kraft der Feder 38, wodurch der Regelkörper 34 von der Ventildichtfläche 77 des Ventilsitzelements 70 abgehoben wird und somit den Durchströmungsquerschnitt freigibt.

Der Anker 32 ist in einer Hülse 46 geführt, in der auch der Kern 26 befestigt ist und die sich radial im Innern des Aktors 18 bis in einen Gehäusevorsprung 48 des Aktorgehäuses 16 erstreckt, der sich axial in das Strömungsgehäuse 12 erstreckt. Zwischen diesem Gehäusevorsprung 48 und einem Endbereich der Hülse 46 ist ein O-Ring 50 angeordnet, über den der radial äußere Bereich der Hülse 46 gegenüber dem geförderten Kühlmittel abgedichtet wird, so dass kein Kühlmittel zur Spule 20 gelangen kann. Des Weiteren begrenzt die Hülse 46 einen Raum 52, der an einer vom Einlass 42 abgewandten Seite des Regelkörpers 34 beziehungsweise der Bewegungseinheit 35 gebildet wird und der gegenüber dem Auslass 44 mittels eines Lippendichtringes 54, dessen geschlossene Seite zum Auslass 44 weist, abgedichtet wird. Der Raum 52 ist über im Regelkörper 34 ausgebildete Durchgangsöffnungen 62, die als axiale Durchgangsbohrungen ausgeführt sind, kontinuierlich mit dem Einlass 42 verbunden, wodurch die Bewegungseinheit 35 druckausgeglichen ist. Da zusätzlich die Fläche an der vom Einlass 42 entfernten Seite, auf die der Druck wirkt, auch der Fläche des Regelkörpers 34 radial innerhalb des Ventilsitzelements 70 entspricht, besteht auch ein Kräftegleichgewicht bezüglich der hydraulischen Kräfte. Entsprechend ist der Regelkörper 34 ausschließlich in Abhängigkeit der Federkraft und der elektromagnetischen Kraft bewegbar.

Das Ventilsitzelement 70 weist ein Hartkunststoffelement 72 und ein Elastomerelement 74 auf. Das Hartkunststoffelement 72 weist einen ringförmigen Querschnitt auf und ist, wie das Strömungsgehäuse 12, aus einem thermoplastischen Kunststoff hergestellt. Das Hartkunststoffelement 72 liegt mit der Außenfläche 90 abschnittsweise an einer Innenfläche des Strömungsgehäuses 12 an und ist mit dem Strömungsgehäuse 12 verschweißt, wobei die Schweißverbindung durch ein Ultraschallschweißverfahren hergestellt wird. Das Strömungsgehäuse 12 umfasst zur Anordnung des Ventilsitzelements 70 eine Aussparung 60, welche derart ausgeführt ist, dass zwischen der den Strömungskanal 14 begrenzenden Innenfläche des Einlasses 42 und der den Durchströmungsquerschnitt begrenzenden Innenfläche 96 des Ventilsitzelements 70 ein bündiger Übergang vorliegt.

Das Elastomerelement 74 ist formschlüssig mit dem Hartkunststoffelement 72 verbunden. Zur Bildung einer formschlüssigen Verbindung zwischen dem Hartkunststoffelement 72 und dem Elastomerelement 74 weisen das Hartkunststoffelement 72 einen an der Innenfläche 92 vorgesehene Befestigungsvorsprung 78 und das Elastomerelement 74 eine zum Befestigungsvorsprung 78 korrespondierende und an der Außenfläche 94 vorgesehene Aussparung 80 auf. Der Befestigungsvorsprung 78 und die Aussparung 80 weisen einen radialen Abschnitt 79 und einen an den radialen Abschnitt 79 anschließenden axialen Abschnitt 81 auf. Zur formschlüssigen Befestigung des Elastomerelements 74 am Hartkunststoffelement 72 in Rotationsrichtung, d.h. um die Symmetrieachse 104, sind am Hartkunststoffelement 72 mehrere, nutartige Aussparungen 82 vorgesehen, in welche jeweils ein am Elastomerelement 74 vorgesehener Vorsprung 84 eingreift.

Das Elastomerelement 74 weist an der dem Einlass 42 zugewandten Stirnseite ein ringförmiges Dichtelement 86 auf, welches an einer Anlagefläche 88 des Strömungsgehäuses 12 vorgespannt anliegt. Die Vorspannung des ringförmigen Dichtelements 86 wird im Montagevorgang des Ventilsitzelements 70 hergestellt, indem das Ventilsitzelement 70 in einer derartigen axialen Position am Strömungsgehäuse 12 befestigt wird, dass sich das Dichtelement 86 verformt. Dabei ist die Höhe H2 des Dichtelements 86 im montierten Zustand des Ventilsitzelements 70 geringer als die Höhe H1 im nicht-montierten Zustand.

Durch das ringförmige Dichtelement 86, welches im montierten Zustand verformt und dadurch vorgespannt am Strömungsgehäuse 12 anliegt, wird ein Leckagepfad, welcher zwischen dem Ventilsitzelement 70 und dem Strömungsgehäuse 12 vorliegt, abgedichtet. Dadurch wird im geschlossenen Zustand des Regel- oder Schaltventils der Einlass 42 zuverlässig vom Auslass 44 fluidisch getrennt. Des Weiteren ist an der Anlagefläche 88 des Strömungsgehäuses 12 eine Nut 98 vorgesehen, in welche das ringförmige Dichtelement 86 eingreift und am Nutgrund vorgespannt anliegt. Dadurch wird nochmals die Abdichtwirkung erhöht. Das erfindungsgemäße Regel- oder Schaltventil weist eine zuverlässige fluidische Abdichtung zwischen dem Einlass und dem Auslass im geschlossenen Zustand des Regel- oder Schaltventils auf.

Es sollte deutlich sein, dass der Schutzbereich des vorliegenden Hauptanspruchs nicht auf das beschriebene Ausführungsbeispiel beschränkt ist und dass Änderungen im Rahmen der beigefügten Ansprüche möglich sind.

## Patentansprüche

1. Regel- oder Schaltventil für einen Kühlmittelkreislauf eines Kraftfahrzeugs mit
einem Gehäuse (10), das einen Einlass (42) und einen Auslass (44) aufweist,
einem Durchströmungsquerschnitt, der zwischen dem Einlass (42) und dem Auslass (44) ausgebildet ist und von einem Ventilsitzelement (70) umgeben ist,
einem Regelkörper (34), der auf den Ventilsitzelement (70) absetzbar und vom Ventilsitzelement (70) abhebbar ist, und
einem Aktor (18), welcher mit dem Regelkörper (34) gekoppelt ist, wobei
das Ventilsitzelement (70) ein Hartkunststoffelement (72) und ein Elastomerelement (74) aufweist, wobei das Hartkunststoffelement (72) am Gehäuse (10) befestigt ist und das Elastomerelement (74) am Hartkunststoffelement (72) befestigt ist, wobei das Elastomerelement (74) an einer dem Regelkörper (34) zugewandten Seite eine mit dem Regelkörper (34) zusammenwirkende Ventildichtfläche (77) aufweist und zur fluiddichen Abdichtung eines zwischen dem Gehäuse (10) und dem Ventilsitzelement (70) vorliegenden Leckagepfads an einer dem Regelkörper (34) abgewandten Seite ein an dem Gehäuse (10) dichtend anliegendes Dichtelement (86) aufweist, **dadurch gekennzeichnet, dass** das
Hartkunststoffelement (72) mit dem Gehäuse (10) derart verschweißt ist, dass die Schweißverbindung eine zusätzliche Abdichtung des Leckagepfads bewirkt.

2. Regel- oder Schaltventil nach Anspruch 1,
**dadurch gekennzeichnet, dass**
das Hartkunststoffelement (72) durch ein Ultraschallschweißverfahren mit dem Gehäuse (10) verschweißt ist.

3. Regel- oder Schaltventil nach einem der vorhergehenden Ansprüche, **dadurch gekennzeichnet, dass**
das Hartkunststoffelement (72) und das Elastomerelement (74) jeweils ringförmig ausgeführt sind, wobei das Hartkunststoffelement (72) mit seiner Außenfläche (90) am Gehäuse (10) befestigt ist und an seiner Innenfläche (92) das ringförmige Elastomerelement (74) angeordnet ist.

4. Regel- oder Schaltventil nach einem der vorhergehenden Ansprüche, **dadurch gekennzeichnet, dass**
das Elastomerelement (74) formschlüssig mit dem Hartkunststoffelement (72) verbunden ist.

5. Regel- oder Schaltventil nach Anspruch 4,
**dadurch gekennzeichnet, dass**
das Hartkunststoffelement (72) an seiner Innenfläche (92) einen Befestigungsvorsprung (78) aufweist und das Elastomerelement (74) an seiner Außenfläche (94) eine zum Befestigungsvorsprung (78) komplementäre Aussparung (80) aufweist.

6. Regel- oder Schaltventil nach Anspruch 5,
**dadurch gekennzeichnet, dass**
der Befestigungsvorsprung (78) und die Aussparung (80) jeweils einen radialen Abschnitt (79) und einen an den radialen Abschnitt (79) anschließenden axialen Abschnitt (81) aufweisen.

7. Regel- oder Schaltventil nach Anspruch 5 oder 6,
**dadurch gekennzeichnet, dass**
der Befestigungsvorsprung (78) und die Aussparung (80) einen kreisringartigen Querschnitt aufweisen.

8. Regel- oder Schaltventil nach einem der Ansprüche 5, 6 oder 7,
**dadurch gekennzeichnet, dass**
der Befestigungsvorsprung (78) mindestens eine axial erstreckende Aussparung (82) und das Elastomerelement (74) einen zur Aussparung (82) komplementären Vorsprung (84) aufweist.

9. Regel- oder Schaltventil nach einem der vorhergehenden Ansprüche, **dadurch gekennzeichnet, dass**
das Dichtelement (86) ein ringförmiger Vorsprung ist.

10. Regel- oder Schaltventil nach einem der vorhergehenden Ansprüche, **dadurch gekennzeichnet, dass**
das Dichtelement (86) in eine Nut (98) eingreift, wobei die Nut (98) an einer dem Dichtelement (86) zugewandten Fläche (88) des Gehäuses (10) vorgesehen ist.

11. Regel- oder Schaltventil nach einem der vorhergehenden Ansprüche, **dadurch gekennzeichnet, dass**
die Höhe H1 des Dichtelements (86) in einem nicht-endmontierten Zustand des Ventilsitzelements (70) größer als die Höhe H2 des Dichtelements (86) in endmontierten Zustand ist.

12. Regel- oder Schaltventil nach einem der vorangegangenen Ansprüche, **dadurch gekennzeichnet, dass**
der Regelkörper (34) mindestens eine Durchgangsbohrung (62) aufweist, über die der Einlass (42) stetig mit einem Raum (52) an der dem Einlass (42) abgewandten Seite des Regelkörpers (34) verbunden ist.

13. Regel- oder Schaltventil nach einem der vorangegangenen Ansprüche, **dadurch gekennzeichnet, dass**
der Aktor (18) ein elektromagnetischer Aktor mit einem Anker (32) ist, wobei der Anker (32) mit dem Regelkörper (34) gekoppelt und bewegbar ist.

## Claims

1. Control or switch valve for a coolant circuit of a motor vehicle with
a housing (10) comprising an inlet (42) and an outlet (44)
a flow cross-section which is formed between the inlet (42) and the outlet (44) and is surrounded by a valve seat element (70)
a valve body (34) which can be placed on the valve seat element (70) and lifted off the valve seat element (70), and
an actuator (18) which is coupled to the valve body (34),
wherein the valve seat element (70) comprises a hard plastic element (72) and an elastomer element (74), wherein the hard plastic element (72) is attached to the housing (10) and the elastomer element (74) is attached to the hard plastic element (72), wherein the elastomer element (74) comprises, on a side facing the valve body (34), a valve sealing surface (77) co-operating with the valve body (34) and, for fluid-tight sealing of a leakage path present between the housing (10) and the valve seat element (70), a sealing element (86) in sealing contact with the housing (10) on a side facing away from the valve body (34), **characterised in that**
the hard plastic element (72) is welded to the housing (10) in such a way that the welded connection provides additional sealing of the leakage path.

2. Control or switch valve according to claim 1, wherein
the hard plastic element (72) is welded to the housing (10) by an ultrasonic welding process.

3. Control or switch valve according to one of the preceding claims, wherein
the hard plastic element (72) and the elastomer element (74) are each configured in an annular shape, wherein the hard plastic element (72) is attached to the housing (10) by its outer surface (90) and the annular elastomer element (74) is arranged on its inner surface (92).

4. Control or switch valve according to one of the preceding claims, wherein
the elastomer element (74) is interlockingly connected to the hard plastic element (72).

5. Control or switch valve according to claim 4, wherein
the hard plastic element (72) comprises a fastening protrusion (78) on its inner surface (92) and the elastomer element (74) comprises a recess (80) complementary to the fastening protrusion (78) on its outer surface (94).

6. Control or switch valve according to claim 5, wherein
the fastening protrusion (78) and the recess (80) each comprise a radial section (79) and an axial section (81) adjoining the radial section (79).

7. Control or switch valve according to claim 5 or 6, wherein
the fastening protrusion (78) and the recess (80) comprise a circular ring-like cross-section.

8. A control or switch valve according to any one of claims 5, 6 or 7, wherein
the fastening protrusion (78) comprises at least one axially extending recess (82) and the elastomer element (74) comprises a protrusion (84) complementary to the recess (82).

9. Control or switch valve according to one of the preceding claims, wherein
the sealing element (86) is an annular protrusion.

10. Control or switch valve according to one of the preceding claims, wherein
the sealing element (86) interacts with a groove (98), wherein the groove (98) is provided on a surface (88) of the housing (10) facing the sealing element (86).

11. Control or switch valve according to one of the preceding claims, wherein
the height H1 of the sealing element (86) in a non-end-mounted state of the valve seat element (70) is higher than the height H2 of the sealing element (86) in the end-mounted state.

12. Control or switch valve according to one of the preceding claims, wherein
the valve body (34) comprises at least one through bore (62), via which the inlet (42) is continuously connected to a space (52) on the side of the valve body (34) facing away from the inlet (42).

13. Control or switch valve according to one of the preceding claims, wherein
the actuator (18) is an electromagnetic actuator with an armature (32), wherein the armature (32) is coupled to the valve body (34) and is movable.

## Revendications

1. Vanne de régulation ou de commutation pour un circuit de refroidissement d'un véhicule automobile avec
un boîtier (10) qui comprend une entrée (42) et une sortie (44),
une section d'écoulement formée entre l'entrée (42) et la sortie (44) et entourée par un élément de siège de soupape (70),
un corps de régulation (34) qui peut être déposé sur l'élément de siège de soupape (70) et soulevé de l'élément de siège de soupape (70), et
un actionneur (18) qui est couplé au corps de régulation (34),
dans lequel
l'élément de siège de soupape (70) comprend un élément en plastique dur (72) et un élément en élastomère (74), l'élément en plastique dur (72) étant fixé au boîtier (10) et l'élément en élastomère (74) étant fixé à l'élément en plastique dur (72), l'élément en élastomère (74) comprenant, sur un côté tourné vers le corps de régulation (34), une surface d'étanchéité de soupape (77) coopérant avec le corps de régulation (34) et, pour assurer l'étanchéité aux fluides d'un chemin de fuite présent entre le boîtier (10) et l'élément de siège de soupape (70), un élément d'étanchéité (86) s'appliquant de manière étanche contre le boîtier (10) sur un côté opposé au corps de régulation (34),
**caractérisé en ce que**
l'élément en plastique dur (72) est soudé avec le boîtier (10) de telle sorte que le joint soudé assure une étanchéité supplémentaire du chemin de fuite.

2. Vanne de régulation ou de commutation selon la revendication 1, **caractérisé en ce que**
l'élément en plastique dur (72) est soudé avec le boîtier (10) par un procédé de soudage par ultrasons.

3. Vanne de régulation ou de commutation selon l'une des revendications précédentes,
**caractérisé en ce que**
l'élément en plastique dur (72) et l'élément en élastomère (74) sont chacun réalisés en forme d'anneau, l'élément en plastique dur (72) étant fixé au boîtier (10) par sa surface extérieure (90) et l'élément en élastomère annulaire (74) étant disposé sur sa surface intérieure (92).

4. Vanne de régulation ou de commutation selon l'une des revendications précédentes,
**caractérisé en ce que**
l'élément en élastomère (74) est relié par complémentarité de forme avec l'élément en plastique dur (72).

5. Vanne de régulation ou de commutation selon la revendication 4, **caractérisé en ce que**
l'élément en plastique dur (72) comprend sur sa surface intérieure (92) une saillie de fixation (78) et l'élément en élastomère (74) comprend sur sa surface extérieure (94) un évidement (80) complémentaire de la saillie de fixation (78).

6. Vanne de régulation ou de commutation selon la revendication 5, **caractérisé en ce que**
la saillie de fixation (78) et l'évidement (80) comprennent chacun une portion radiale (79) et une portion axiale (81) s'ajoutant à la portion radiale (79).

7. Vanne de régulation ou de commutation selon la revendication 5 ou 6, **caractérisé en ce que**
la saillie de fixation (78) et l'évidement (80) comprennent une section transversale de type anneau circulaire.

8. Vanne de régulation ou de commutation selon l'une des revendications 5, 6 ou 7,
**caractérisé en ce que**
la saillie de fixation (78) comprend au moins une projection (82) s'étendant axialement et l'élément en élastomère (74) comprend une projection (84) complémentaire de la projection (82).

9. Vanne de régulation ou de commutation selon l'une des revendications précédentes,
**caractérisé en ce que**
l'élément d'étanchéité (86) est une projection annulaire.

10. Vanne de régulation ou de commutation selon l'une des revendications précédentes,
**caractérisé en ce que**
l'élément d'étanchéité (86) s'engage dans une rainure (98), la rainure (98) étant prévue sur une surface (88) du boîtier (10) orientée vers l'élément d'étanchéité (86).

11. Vanne de régulation ou de commutation selon l'une des revendications précédentes,
**caractérisé en ce que**
la hauteur H1 de l'élément d'étanchéité (86) dans un état non assemblé de l'élément de siège de soupape (70) est supérieure à la hauteur H2 de l'élément d'étanchéité (86) dans un état assemblé final.

12. Vanne de régulation ou de commutation selon l'une quelconque des revendications précédentes,
**caractérisé en ce que**
le corps de régulation (34) comprend au moins un trou traversant (62) par lequel l'entrée (42) est reliée en permanence à un espace (52) sur le côté du corps de régulation (34) opposé à l'entrée (42).

13. Vanne de régulation ou de commutation selon l'une des revendications précédentes,
**caractérisé en ce que**
l'actionneur (18) est un actionneur électromagnétique avec une armature (32), l'armature (32) étant couplée au corps de régulation (34) et déplaçable.
